(19) Europäisches Patentamt
European Patent Office
Office européen des brevets

(11) **EP 3 097 066 B1**

(12) **EUROPÄISCHE PATENTSCHRIFT**

(45) Veröffentlichungstag und Bekanntmachung des Hinweises auf die Patenterteilung:
**15.05.2024 Patentblatt 2024/20**

(21) Anmeldenummer: **15701508.2**

(22) Anmeldetag: **20.01.2015**

(51) Internationale Patentklassifikation (IPC):
*C04B 41/89* (2006.01)    *G04B 39/00* (2006.01)
*G06K 7/10* (2006.01)

(52) Gemeinsame Patentklassifikation (CPC):
(C-Sets verfügbar)
**C04B 41/009; C04B 41/52; C04B 41/89;
G04B 39/006;** C04B 2111/80    (Forts.)

(86) Internationale Anmeldenummer:
**PCT/EP2015/051032**

(87) Internationale Veröffentlichungsnummer:
**WO 2015/107224 (23.07.2015 Gazette 2015/29)**

(54) **KERAMIKSUBSTRAT MIT FUNKTIONSBESCHICHTUNG**

CERAMIC SUBSTRATE WITH A FUNCTIONAL COATING

SUBSTRAT EN CÉRAMIQUE PRÉSENTANT UN REVÊTEMENT FONCTIONNEL

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **20.01.2014 DE 102014000506**

(43) Veröffentlichungstag der Anmeldung:
**30.11.2016 Patentblatt 2016/48**

(73) Patentinhaber: **Fraunhofer-Gesellschaft zur
Förderung
der angewandten Forschung e.V.
80686 München (DE)**

(72) Erfinder:
• **SCHNETTER, Lars
53518 Wimbach (DE)**
• **RICHTER, Gert
75203 Königsbach-Stein (DE)**
• **KRAMER, Gordian
73776 Altbach (DE)**

(56) Entgegenhaltungen:
**EP-A1- 1 962 260    WO-A1-2014/154875**

(52) Gemeinsame Patentklassifikation (CPC): (Forts.)

C-Sets
**C04B 41/009, C04B 35/443;
C04B 41/52, C04B 41/4529, C04B 41/5027,
C04B 41/5033;
C04B 41/52, C04B 41/4529, C04B 41/5035;
C04B 41/52, C04B 41/4529, C04B 41/5041,
C04B 41/522;
C04B 41/52, C04B 41/4529, C04B 41/5044;
C04B 41/52, C04B 41/4529, C04B 41/5066;
C04B 41/52, C04B 41/4529, C04B 41/5096,**

**C04B 41/5155, C04B 41/522;
C04B 41/52, C04B 41/4529, C04B 41/5116**

**Beschreibung**

Die Erfindung betrifft einen Werkstoffverbund aus einem Keramiksubstrat mit einer Funktionsbeschichtung, ein Verfahren zu seiner Herstellung sowie die Verwendung des Werkstoffverbundes. Insbesondere betrifft die Erfindung ein Keramiksubstrat mit einer optischen Funktionsbeschichtung, welche mittels eines PVD-Verfahrens abgeschieden wurde.

Im Allgemeinen bestehen optische Bauteile aus Glas, Glaskeramik oder Kunststoffen, in seltenen Ausnahmefällen auch aus einkristallinem Saphir ($Al_2O_3$-Keramik). Gläser und Kunststoffe haben gemein, dass Sie geringe Festigkeiten, Temperaturbeständigkeiten und Kratzfestigkeiten aufweisen. Gläser haben neben den oben beschriebenen Nachteilen ein hohes Gewicht, sind leicht zerbrechlich und zeigen meist eine farbliche Eintrübung. Kunststoffe dagegen haben eine geringe Härte und nehmen zum Teil Wasser auf. Keramische Einkristalle sind in ihrer Herstellung mit sehr hohen Kosten verbunden und deshalb oft unrentabel.

Für viele Anwendungen solcher Bauteile, wie z.B. als Abdecklinsen, Schutzlinsen bei Optiken, Scannerfenster sind Optiken ohne starke optische Dispersion notwendig, d.h. sie müssen im Wesentlichen farblos sein. Im Gegensatz dazu kann gerade im Design- und Schmuckbereich oder auch bei Anwendungen im Filterbereich eine gezielte Einfärbung wünschenswert oder notwendig sein. Andererseits ist es sehr schwer eine Antireflexschicht ohne Einfärbung abzuscheiden. Meist sind hierfür eine spezielle Abstimmung von Schichtmaterialien und Substrat sowie ein mehrschichtiger Aufbau notwendig. Die gezielte Farbgestaltung (Dispersion) ist somit eine zentrale Werkstoffeigenschaft nahezu jeden optischen Bauteils.

Um die Eigenschaften der oben genannten Bauteile zu verbessern oder um unterschiedlichste Funktionen zu erfüllen, können Gläser, Kunststoffe, Glaskeramiken und keramische Einkristalle mit Funktionsbeschichtungen, insbesondere mit optischen Funktionsbeschichtungen, beschichtet werden.

Die Funktionsbeschichtung sollte eine auf die zahlreich möglichen Einsatzgebiete angepasste und maßgeschneiderte Funktion erfüllen..

Grundsätzlich gilt: Funktionsschichten können mit unterschiedlichen Beschichtungsverfahren abgeschieden werden, wie z.B. Abscheidung aus der Dampfphase (PVD und CVD-Verfahren) sowie mittels thermischer Umwandlung (Oxidation) oder durch Aufbringen von Flüssigkeiten (Sol) über z.B. Sol-Gel- oder Spin-on-Verfahren. Zum Stand der Technik ist anzumerken, dass die Substrate für den optischen Einsatzzweck in speziell für die Optik angepassten Beschichtungsverfahren beschichtet werden. Durch die geringe Temperaturbeständigkeit von Gläsern und Kunststoffen sind Beschichtungstemperaturen von max. ca. 500 °C für Gläser und max. ca. 200 °C für Kunststoffe möglich. Deshalb ist die mögliche Beschichtungstemperatur, und damit der Energieeintrag in das Substrat, nach oben begrenzt.

Aus dem Stand der Technik ist bekannt, dass durch einen größeren Energieeintrag die Schichteigenschaften, z.B. Schichtdichte bzw. Schichtkompaktheit, Schichthaftung oder Kratzfestigkeit, nachhaltig sehr positiv beeinflusst werden. Es ist daher ein möglichst hoher Energieeintrag erwünscht (vgl. bspw. auch DE 102004027842 A1). Der Energieeintrag ist steuerbar und steigt z.B. durch höhere Beschichtungstemperaturen oder durch den Einsatz von Plasma oder Ionen-Beschuss.

EP 1 962 260 A bezieht sich auf ein spezifisches transparentes Spinell-Substrat.

Aufgabe der Erfindung ist die Bereitstellung eines Werkstoffverbundes mit einer Funktionsbeschichtung, der die oben genannten Nachteile nicht aufweist.

Die erfindungsgemäße Aufgabe wird durch die Merkmale des Hauptanspruchs gelöst. Vorzugsweise Ausgestaltungen finden sich in den Unteransprüchen.

Unter Keramiksubstraten werden im Sinne der vorliegenden Erfindung insbesondere polykristalline Keramiken verstanden. Es sollen jedoch auch einkristalline Substrate wie Saphirsubstrate unter diesen Begriff subsumiert werden. Eine polykristalline Keramik, die im Urzustand aus keramischen Pulvern besteht, zeichnet sich durch ein Herstellungsverfahren aus keramischen Pulvern aus, die durch eine an sich bekannte Press- oder Schlickerguss- oder Extrusionstechnologie zu Substraten geformt werden und anschließend oder gleichzeitig mit der Formgebung durch Sintern verfestigt werden. Glaskeramische Herstellungsverfahren und Produkte sollen ausdrücklich nicht von diesem Begriff erfasst sein.

Erfindungsgemäß handelt es sich bei den Keramiksubstraten um polykristalline Keramiken wie in Anspruch 1 definiert.

Als Keramiksubstrat kommen polykristalline oder einkristalline opake oder transparente Keramiken beispielsweise aus $ZrO_2$, $Al_2O_3$, SiC, $Si_3N_4$, Spinell ($MgAl_2O_4$), AIN, SiAION oder AION oder aus Oxiden von Al, Mg und/ oder Y in Betracht. Grundsätzlich sind jedoch alle Keramiken verwendbar, wenn die Transparenz des Substrats keine wesentliche Beschränkung darstellt, beispielsweise, wenn das Substrat für einen Spiegel verwendet werden soll.

Erfindungsgemäß bestehen die Keramiksubstrate aus einem Oxid, Nitrid oder Carbid von Mg, Al, Zr, Si oder Y oder aus einer Kombination dieser Oxide, Nitride und Carbide. Weiter bevorzugt besteht das Keramiksubstrat im Wesentlichen aus $MgAl_2O_4$ und besonders bevorzugt ist das Keramiksubstrat $MgAl_2O_4$. Letzteres ist in polykristalliner Form beispielsweise unter dem Handelsnamen "Perlucor" vom Hersteller CeramTec-ETEC (Deutschland) beziehbar.

Der hier vorgestellte Werkstoffverbund aus Keramiksubstrat und Funktionsbeschichtung kann eine freitragende Keramik mit Beschichtung sein oder kann Teil eines komplexeren Bauteils, beispielsweise Teil einer architektonischen Vorrichtung, z.B. als Schauglas sein oder auch eine Panzerglasscheibe oder Teile davon substituieren. Der erfindungsgemäße Werkstoffverbund kann zudem in Laminatwerkstoffen, z.B. für Smartphonedisplays verwendet werden.

Im Gegensatz zu aus dem Stand der Technik bekannten Substraten aus Glas, Glaskeramik oder Kunststoffen, weisen Keramiksubstrate eine hohe Temperaturbeständigkeit, Festigkeit und Steifigkeit auf. Zudem zeichnen sie sich durch eine höhere Härte, Bruchfestigkeit und Kratzfestigkeit sowie ein geringeres Gewicht aus. Während durch thermische und intrinsische Spannungen beim Abscheiden von optischen Schichten auf Gläsern und Kunststoffen hohe Schichteigenspannungen entstehen, wodurch sich diese Substrate verziehen können. entsteht beim Beschichten von keramischem Substrat kein Verzug des Keramiksubstrats aufgrund der hohen Materialsteifigkeit. Beschichtungen können daher bei hohen Temperaturen und/oder hohem Energieeintrag ohne Beeinträchtigung des Substrats abgeschieden werden.

Ein weiterer Vorteil von Keramiksubstraten gegenüber Glas- und Kunststoffsubstraten ist die bessere Haftung zwischen Substrat und Beschichtung. Es wird davon ausgegangen, dass die bessere Haftung auf einer keramischen Bindung zwischen den Werkstoffpartnern beruht.

Glas- und insbesondere Kunststoffsubstrate sind gegenüber chemischen Angriffen anfällig. Durch Kontakt mit nasschemischen Medien können die aufgebrachten Schichten reißen oder sich ablösen. Beschichtungen auf Keramiksubstraten werden aufgrund der chemischen Bindung dagegen nicht oder deutlich weniger chemisch angegriffen (chemische Inertheit).

Polykristalline Keramiken haben gegenüber Einkristallen, wie z.B. Saphir, den Vorteil, dass sie einfacher herzustellen und leichter mechanisch zu bearbeiten sind. Sie sind daher auch deutlich günstiger (Kostenvorteil). Saphir-Einkristalle haben darüber hinaus den Nachteil, doppelbrechend, also optisch anisotrop zu sein. Polykristalline Keramiken wie Spinell sind dagegen einfach brechend und optisch isotrop.

Unter einer Funktionsbeschichtung ist im Sinne der vorliegenden Erfindung eine solche Beschichtung zu verstehen, welche mindestens eine Funktion, erfüllt, d.h. mindestens eine Eigenschaft, beispielsweise die optische Eigenschaft, des beschichteten Substrates modifiziert. Dabei beschreiben die optischen Eigenschaften eines Substrates die Wechselwirkung dieses Substrates mit elektromagnetischer Strahlung, vorzugsweise mit solcher im visuellen und/oder infraroten Bereich.

Erfindungsgemäß kann es sich bei der Funktionsbeschichtung des Werkstoffverbundes um eine einseitige, doppelseitige oder mehrseitige Beschichtung des Keramiksubstrates handeln. Die erfindungsgemäße Funktionsbeschichtungen können dabei beispielsweise als optische, thermische, mechanische oder chemische Funktionsschicht ausgebildet sein kann. Kombinationen solcher Funktionsbeschichtungen sind erfindungsgemäß ebenfalls vorgesehen.

Vorzugsweise kann eine optische Funktionsschicht beispielsweise eine Anti-Reflex-Schicht, eine Spiegelschicht, eine IR-absorbierende Schicht, eine IR-reflektierende Schicht und/oder eine photochrome Schicht darstellen.

Eine thermische Funktionsschicht kann vorzugsweise eine wärmeleitende Schicht, eine Beheizungsschicht, eine thermochrome Schicht und/oder eine strahlungsreflektierende Schicht darstellen.

Eine mechanische Funktionsschicht kann vorzugsweise eine Antikratzschicht gegen mechanische Abrasion und/oder eine Schicht mit gesteigerter Mikrohärte darstellen.

Eine chemische Funktionsschicht kann vorzugsweise eine Schicht sein, die im Vergleich zum unbeschichteten Keramiksubstrat hydrophiler/lipophober, lipophiler/hydrophober ist und/oder Ruß abweisender ist.

Gemäß einer besonders bevorzugten Ausführungsform ist das Keramiksubstrat und/oder die Funktionsbeschichtung und/oder der Werkstoffverbund transparent. Diese Werkstoffverbunde können als Ersatz für alle beschichteten transparenten Substrate verwendet werden, jedoch mit den oben beschriebenen Vorteilen.

Vorzugsweise weist das Keramiksubstrat und/oder die Funktionsbeschichtung im Bereich von 380 bis 780 nm (VIS-Bereich) und/oder im Bereich von 900 bis 7000 nm (IR-Bereich) eine mittlere RIT von mindestens 86 %, weiter bevorzugt von mindestens 89 % und besonders bevorzugt von mindestens 94 % auf.

Beispielsweise kann ein Werkstoffverbund mit einer farblosen Funktionsbeschichtung, die eine Dicke von höchstens 2 $\mu$m, bevorzugt höchstens 1 $\mu$m, besonders bevorzugt höchstens 0,5 $\mu$m aufweist, in einem Wellenlängenbereich von 420 bis 650 nm eine Schwankungsbreite der RIT (real in-line transmission) von höchstens 10 %, bevorzugt höchstens 5 % und besonders bevorzugt höchstens 2 % aufweisen.

Mit dem Begriff "farblos" wird im Rahmen dieser Erfindung das bezeichnet, was kein Licht absorbiert. Es handelt sich um einen Gegenstand, der nicht mit elektromagnetischer Strahlung im sichtbaren, visuellen Bereich (VIS-Bereich) wechselwirkt. Bezogen auf den Verbundwerkstoff aus Keramiksubstrat und Funktionsbeschichtung bedeutet dies, dass der Werkstoffverbund Licht im VIS-Bereich nicht reflektiert und/oder absorbiert und daher keinen Farbstich oder eine farbliche Eintrübung aufweist oder eine Färbung hervorhebt.

Durch eine geringe Schwankung der RIT über die gesamte beschichtete Fläche wird eine qualitativ hochwertige Funktionsbeschichtung erzielt. Ist der Verbundwerkstoff farblos, ist er insbesondere für optische Anwendungen geeignet. Für fotografische Anwendungen beispielsweise, bei denen natürliche Farben erwünscht sind, kann ein optisches Bauteil mit einem solchen Verbundwerkstoff die Verfälschung von Farben vermeiden.

Grundsätzlich sind natürlich auch optische Funktionsbeschichtungen möglich, die zumindest eine Funktionsschicht umfassen, die die Transmission elektromagnetischer Wellen absorbierend, reflektierend oder streuend selektiert, d.h. wellenlängenabhängig einschränkt. Besonders bevorzugt findet diese Selektion im VIS-Bereich statt.

In einer weiteren bevorzugten Ausführungsform der Erfindung kann die Funktionsbeschichtung zumindest eine Funktionsschicht umfassen, die eine reflexionsmindernde Wirkung hat. Unter reflexionsmindernder Wirkung soll verstanden werden, dass der Werkstoffverbund aus Keramiksubstrat und Funktionsbeschichtung eine höhere RIT aufweist als das Keramiksubstrat ohne die Funktionsbeschichtung. Es gilt die Beziehung:

$$RIT_{max.} = 1 - R_{max.}$$

$R_{max.} = 1 - 2x \, ((n_{Umgebung} - n_{Substrat}) \, / \, (n_{Substrat} + n_{Umgebung}))$
$R_{max.}$ = maximale Reflexion
$n_{Umgebung}$ = Brechungsindex des umgebenden Mediums
$n_{Substrat}$ = Brechungsindex des Werkstoffverbundes.

Gemäß einer bevorzugten Ausführungsform der Erfindung kann die Transmission transparenter, polykristalliner Keramiken gesteigert werden. Dies kann beispielsweise durch die Abscheidung einer Anti-Reflex- bzw. Entspiegelungsschicht erreicht werden. Diese Funktionsschichten haben die Aufgabe, den Brechungsindex am Übergang Substrat/Luft anzupassen, um Reflexionen an diesem Übergang zu minimieren. Dadurch kann die Transmission von elektromagnetischen Wellen (Licht) im Wellenlängenbereich von 100 nm bis 40.000 nm, bevorzugt im Wellenlängenbereich von 300 nm bis 4.000 nm und besonders bevorzugt im visuellen Bereich (380 nm bis 780 nm) gesteigert werden.

Vorzugsweise kann die Transparenz ohne Verfärbung des Keramiksubstrates durch eine Anpassung im gesamten visuellen Wellenlängenbereich oder in einzelnen Teilbereichen vorgenommen werden.

Um das Transmissionsvermögen des Werkstoffverbundes zu verbessern, können eine oder mehrere Funktionsschichten in die optische Funktionsbeschichtung eingebaut werden, welche in einem spezifischen Wellenlängenintervall mit einer Breite von bevorzugt 200 nm, weiter bevorzugt 100 nm, besonders bevorzugt 50 nm und ganz besonders 15 nm ein im Vergleich zum unbeschichteten Keramiksubstrat um bevorzugt mindestens 5 %, weiter bevorzugt mindestens 10 %, besonders bevorzugt mindestens 15 % und ganz besonders bevorzugt mindestens 20 % erhöhtes mittleres Transmissionsvermögen aufweisen.

In Frage kommen hier beispielsweise die Wellenlängenintervalle 350 bis 500 nm, 450 bis 600 nm und/oder 500 bis 780 nm. Besonders interessant ist das Wellenlängenintervall 300 bis 500 nm. Ganz besonders interessant ist das Wellenlängenintervall 350 bis 450 nm.

Eine bevorzugte Ausführungsform der Erfindung weist zumindest eine Funktionsschicht auf, die eine reflexionssteigernde Wirkung hat, so dass der Werkstoffverbund aus Keramiksubstrat und Funktionsbeschichtung eine höhere Reflexion als das Keramiksubstrat ohne die Funktionsbeschichtung aufweist. Die folgende Beziehung ist erfüllt:

$$R_{max.} = 1 - 2x \, ((n_{Umgebung} - n_{Substrat}) \, / \, (n_{Substrat} + n_{Umgebung}))$$

$R_{max.}$ = maximale Reflexion
$n_{Umgebung}$ = Brechungsindex des umgebenden Mediums
$n_{Substrat}$ = Brechungsindex des Werkstoffverbundes.

Keramik-Substrate mit solchen Funktionsbeschichtungen sind mehr oder weniger spiegelnd und können insbesondere Verwendung für die Oberflächengestaltung von mechanisch, thermisch oder chemisch stark belasteten Teilen Verwendung finden.

Gemäß einer Ausführungsform wird die Oberfläche eines vorzugsweise polykristallinen Keramiksubstrats mit Materialien von höherem Brechungsindex beschichtet. Das so beschichtete Substrat lässt sich als Spiegel nutzen, wobei das Substrat auch opak sein kann. Insbesondere geeignet sind metallische Funktionsschichten in Verbindung mit einer angepassten Antikratz-Schicht, z.B. aus kristallinem oder amorphen $SiO_x$.

Gemäß einer weiteren bevorzugten Ausführungsform der Erfindung kann die Transmission transparenter, polykristalliner Keramiken gesteigert oder gesenkt werden. Dies kann beispielsweise durch die Abscheidung eines IR-Filters, der entweder die IR-Strahlung reflektieren oder absorbieren kann, erreicht werden. Diese Funktionsschichten haben die Aufgabe, den Brechungsindex am Übergang Substrat/Luft anzupassen, um Reflexionen an diesem Übergang zu minimieren oder abhängig vom Anwendungsfall auch zu maximieren. Dadurch kann die Transmission von elektromagnetischen Wellen (Licht) im Wellenlängenbereich von 100 nm bis 40.000 nm, bevorzugt im IR-Bereich (780 nm bis 7.000 nm) gesteigert oder gesenkt werden.

Eine Funktionsbeschichtung mit entsprechenden IR-Filtereigenschaften ermöglicht die Verwendung des Werkstoffverbundes zum Herausfiltern von Licht beispielsweise > 1000 nm, wie bei Laserschutzfenstern.

Gemäß einer bevorzugten Ausführungsform weist die Funktionsbeschichtung eine Schichtdicke von höchstens 2 μm auf, und die Schwankungsbreite der Reflexion im Bereich von 380 bis 780 nm liegt bei einer einseitig abgeschiedenen Funktionsbeschichtung, die durch das keramische Substrat geschützt ist bei höchstens 10 %, und bei einer einseitig abgeschiedenen Funktionsbeschichtung, die nicht durch das keramische Substrat geschützt ist höchstens 5 %, besonders bevorzugt höchstens 3 %.

Die Funktionsbeschichtung kann auch aus einem Paket mit mehreren Funktionsschichten, insbesondere ausgewählt aus den vorstehend beschriebenen Funktionsschichten mit einer reflexionsmindernden und Funktionsschichten mit einer reflexionssteigernden Wirkung bestehen. Solche Funktionsbeschichtungen können beispielsweise als Multilayer-Antireflex (AR)-Schichten Verwendung finden.

Das Spektraldiagramm eines Keramiksubstrats kann eine oder mehrere Transmissionsabnahmen - jeweils in einem bestimmten Wellenlängenbereich - aufweisen. Dies bedeutet, dass das Substrat im entsprechenden Wellenlängenbereich weniger durchlässig für elektromagnetische Strahlung ist. Neben dem UV-nahen Bereich kommen hier vor allem der visuelle Bereich (380 bis 780 nm) der UV-Bereich (100 bis 380 nm) sowie der IR-Bereich (780 bis 40.000 nm, insbesondere 780 bis 7000 nm) in Betracht.

Zum Ausdruck kommt dies dann durch eine entsprechende Schwankungsbreite der RIT im entsprechenden Wellenlängenbereich.

So weist das Spektrum von Spinellkeramik ($MgAl_2O_4$) eine Abnahme der Transmission im kurzwelligen visuellen Bereich auf. Dies bedeutet, dass ein entsprechendes Keramiksubstrat im UV-nahen Bereich weniger durchlässig für elektromagnetische Strahlung ist.

Das Substrat ist durch Auswahl der Werkstoffkomponenten durchlässig für rein weißes Licht. Um den Vorteil der Farbneutralität des Substrats beibehalten zu können, ist es sinnvoll, die Beschichtung an das Spektraldiagramm des Substrates anzupassen. Durch eine unangepasste Beschichtung kann es zu einer Farbbeeinflussung des Werkstoffverbundes kommen. Zusätzlich könnte die AR-Wirkung im UV-nahen Bereich nur eingeschränkt genutzt werden.

Eine Möglichkeit, die Farbbeeinflussung zu vermeiden, ist eine Beschichtung abzuscheiden, die über den gesamten Wellenlängenbereich möglichst homogen ausgeführt ist. Die Abweichung der RIT muss dabei kleiner 14 %, bevorzugt kleiner als 9 %, besonders bevorzugt kleiner als 5 % und ganz besonders bevorzugt kleiner als 3 % sein.

So ist es durch Aufbringen einer höherbrechenden Beschichtung möglich, die Transmission des langwelligen Bereichs gezielt abzusenken. Dadurch wird allerdings die Transmission des Werkstoffverbundes insgesamt verringert.

Ebenso ist es möglich und auch wünschenswert, die Transmission im kurzwelligen Bereich zu erhöhen und auf das gleiche Niveau anzuheben wie im langwelligen Bereich nach der Beschichtung, um somit aus einem eingefärbten Substrat ein klar weißes ohne Farbwirkung zu erzeugen.

Würde dies unterlassen und würde die Beschichtung bei einem Substrat mit geringerer Transmission im kurzwelligen Bereich nicht angepasst, würde es trotz Beschichtung zu einer verringerten Transmission im UV-nahen Bereich kommen und damit weiterhin zu einer Farbbeeinflussung des Werkstoffverbundes.

Als Werkstoffe für derartige Beschichtungen eignen sich die Fluoride, Oxide, Nitride, Carbide und Carbonitride der Metalle Ti, Si, Hf, Mg, Zr, Al, Ag, Au, Ni und Nb.

Um das Transmissionsvermögen des Werkstoffverbundes im UV-nahen Bereich zu verbessern, werden erfindungsgemäß eine oder mehrere Funktionsschichten in die Funktionsbeschichtung eingebaut, welche im UV-nahen Bereich, bevorzugt von 300 bis 500 nm, besonders bevorzugt von 350 bis 450 nm ein im Vergleich zum unbeschichteten Keramiksubstrat erhöhtes mittleres Reflexionsvermögen aufweisen, was dazu führt, die Transmission des Werkstoffverbundes durch das Zusammenwirken der unterschiedlichen Schichtlagen zu erhöhen.

Gemäß einer bevorzugten Ausführungsform weist das unbeschichtete Keramiksubstrat im Bereich von 380 bis 780 nm eine Schwankungsbreite der RIT von höchstens 25 %, weiter bevorzugt höchstens 20 % auf, während der Werkstoffverbund, also das beschichtete Keramiksubstrat, lediglich eine Schwankungsbreite der RIT von höchstens 10 %, weiter bevorzugt höchstens 5 % aufweist.

Gemäß einer anderen bevorzugten Ausführungsform weist das unbeschichtete Keramiksubstrat im Bereich von 900 bis 7000 nm eine Schwankungsbreite der RIT von höchstens 25 %, weiter bevorzugt höchstens 20 % auf, während der Werkstoffverbund, also das beschichtete Keramiksubstrat, lediglich eine Schwankungsbreite der RIT von höchstens 10 %, weiter bevorzugt höchstens 5 % aufweist.

Gemäß einer weiter bevorzugten Ausführungsform verändert sich beim Durchgang elektromagnetischer Strahlung der Wellenlänge 380 bis 780 nm durch den Werkstoffverbund das Verhältnis der mittleren Strahlungsintensitäten bei 380 bis 400 nm und bei 700 bis 720 nm um höchstens 5 %. Dies ist gleichbedeutend damit, dass der Werkstoffverbund die Lichtfarbe des durchgehenden sichtbaren Lichtes nicht beeinflusst.

Eine ähnliche Verbesserung im Sinne der Erfindung kann auch für einzelne Farbspektren gezielt gestaltet werden, so dass ein bestimmter Farbton im Vergleich zu anderen Farben verbessert wahrgenommen werden kann.

Dazu werden je nach zu verstärkendem Farbton eine oder mehrere Funktionsschichten in die Funktionsbeschichtung eingebaut, welche in einem spezifischen Wellenlängenintervall mit einer Breite von bevorzugt 200 nm, weiter bevorzugt 100 nm, besonders bevorzugt 50 nm und ganz besonders 15 nm ein im Vergleich zum unbeschichteten Keramiksubstrat um bevorzugt mindestens 5 %, weiter bevorzugt mindestens 10 %, besonders bevorzugt mindestens 15 % und ganz besonders bevorzugt mindestens 20 % erhöhtes mittleres Reflexionsvermögen aufweisen.

In Frage kommen hier neben dem bereits weiter oben genannten UV-nahen Bereich beispielsweise die Wellenlängenintervalle einzelner Farben wie 400 bis 450 nm für Dunkelblau, 400 bis 500 nm für Hellblau, 500 bis 550 nm für Grün, 550 bis 600 nm für Gelb, 650 bis 700 nm für Orange, 700-780 für Rot.

Die Funktionsbeschichtung des Werkstoffverbunds ist wie in Anspruch 1 definiert.

Die Funktionsbeschichtung des Werkstoffverbundes umfasst mindestens zwei Doppelschichten bestehend aus einer ersten Funktionsschicht und einer zweiten Funktionsschicht, wobei der Brechungsindex der optischen Funktionsbeschichtung mit dem Brechungsindex des Keramiksubstrats in einem Verhältnis von 1,5:1 bis 1:1,5, bevorzugt von 1:1 bis 1:1,4, besonders bevorzugt von 1:1,15 bis 1:1,35 und ganz besonders bevorzugt von 1:1,28 bis 1:1,32 steht.

Die Funktionsbeschichtung kann mindestens zwei Funktionsschichten mit unterschiedlichem Brechungsindex umfassen. Dabei unterscheiden sich die Brechungsindices der mindestens zwei Funktionsschichten bevorzugt um den Faktor 1,15 bis 2,2, weiter bevorzugt 1,25 bis 2,0, besonders bevorzugt 1,30 bis 1,45 und ganz besonders bevorzugt 1,35 bis 1,4.

Die Funktionsbeschichtung kann mindestens eine Doppelschicht bestehend aus einer inneren Funktionsschicht mit höherem und einer äußeren Funktionsschicht mit niedrigerem Brechungsindex umfassen.

Besonders bevorzugt umfasst die Funktionsbeschichtung mindestens vier im Wesentlichen identische Doppelschichten, wobei der Brechungsindex der inneren Funktionsschicht um den Faktor 1,15 bis 2,2, bevorzugt 1,25 bis 2,0, besonders bevorzugt 1,30 bis 1,45 und ganz besonders bevorzugt 1,35 bis 1,4 höher ist als der der äußeren.

In einer weiteren bevorzugten Ausführungsform umfasst die Funktionsbeschichtung mindestens eine Doppelschicht bestehend aus einer inneren Funktionsschicht mit niedrigerem und einer äußeren Funktionsschicht mit höherem Brechungsindex.

Besonders bevorzugt umfasst die Funktionsbeschichtung mindestens vier im Wesentlichen identische Doppelschichten, wobei der Brechungsindex der inneren Funktionsschicht um den Faktor 1,15 bis 2,2, bevorzugt 1,25 bis 2,0, besonders bevorzugt 1,30 bis 1,45 und ganz besonders bevorzugt 1,35 bis 1,4 niedriger ist als der der äußeren.

Vorzugsweise weist die Funktionsbeschichtung eine Gesamtschichtdicke von höchstens 2 $\mu$m, weiter bevorzugt von höchstens 1 $\mu$m und besonders bevorzugt von höchstens 0,5 $\mu$m auf.

Vorzugsweise steht die Gesamtschichtdicke der Funktionsbeschichtung zu der Dicke des Keramiksubstrates in einem Verhältnis von $0,1 \times 10^{-3} : 1$ bis $40 \times 10^{-3} : 1$, bevorzugt von $0,1 \times 10^{-3} : 1$ bis $2 \times 10^{-3} : 1$.

Die Funktionsschichten können überwiegend aus anorganischen Verbindungen, bevorzugt im Wesentlichen aus anorganischen Verbindungen bestehen.

Als anorganische Verbindungen kommen dabei vor allem Fluoride, Oxide, Carbide und/oder Nitride der Erdalkalimetalle, der Übergangsmetalle, der Lanthanoide, der Actinoide, der Metalle der 13. Gruppe des PSE, der Metalle der 15. Gruppe des PSE, der Halbmetalle der 14. Gruppe des PSE und/oder der Halbmetallen der 15. Gruppe des PSE in Frage.

Die Funktionsschichten können

im Wesentlichen aus einem Fluorid, einem Oxid, einem Carbid oder einem Nitrid von Mg, Ca, Sc, Mo, V, Cr, Mn, Yt, Ta, W, Ni, Hf, Li, Ca, Si, Nb, Al, Ti oder Zr oder aus einer Kombinationen dieser Fluoride, Oxide, Carbide und Nitride bestehen. Die Funktionsschichten können

im Wesentlichen aus einem Fluorid, einem Oxid, einem Carbid oder einem Nitrid von Hf, Li, Ca, Mg, Si, Nb, Al, Ti oder Zr oder aus einer Kombinationen dieser Fluoride, Oxide, Carbide und Nitride bestehen.

Erfindungsgemäß bestehen die erfindungsgemäßen Funktionsschichten im Wesentlichen aus Titan(IV)oxid, Zirkonium(IV)oxid, Hafnium(IV)oxid, Niob(V)oxid und/oder Aluminiumoxid oder Magnesiumfluorid und/oder Siliziumdioxid.

Weiter umfasst die Funktionsbeschichtung mindestens eine Doppelschicht bestehend aus einer ersten Funktionsschicht im Wesentlichen bestehend aus Titan(IV)oxid, Hafnium(IV)oxid und/oder Niob(V)oxid und einer zweiten Funktionsschicht im Wesentlichen bestehend aus Siliziumdioxid. Vorzugsweise umfasst die Funktionsbeschichtung dabei mindestens 2, weiter bevorzugt mindesten 3 und besonders bevorzugt mindestens 4 dieser Doppelschichten.

Dabei handelt es sich bei der ersten Funktionsschicht vorzugsweise um die weiter innen und bei der zweiten Funktionsschicht um die weiter außen liegende Schicht innerhalb der Doppelschicht (vom Substrat aus betrachtet).

Mittels der erfindungsgemäßen Funktionsbeschichtungen lassen sich gezielt die Eigenschaften eines Keramiksubstrats auf vielfältige Einsatzmöglichkeiten anpassen. So können die entsprechenden Beschichtungen auf das Einsatzgebiet angepasste und maßgeschneiderte Funktionen erfüllen.

Vorzugsweise zeichnen sich die Funktionsbeschichtungen dadurch aus, dass sie neben einer Hauptfunktion eine Nebenfunktion erfüllen bzw. eine Nebeneigenschaft aufweisen, die im Vergleich zum Stand der Technik verbessert ist.

Gemäß einer besonders bevorzugten Ausführungsform weist ein transparentes, polykristallines Keramiksubstrat eine Funktionsbeschichtung mit einer, optischen Hauptfunktion auf, die mindestens auch eine Nebenfunktion (Nebeneigenschaft) aufweisen kann. Als eine solche Nebenfunktion kommt u.a. in Frage:

- verbesserte Schichtadhäsion im Substrat-Schichtverbund durch die Verwendung von keramischen Werkstoffen, deren Werkstoffeigenschaften ähnlich denen der Beschichtung sind, z.B. bezüglich thermischer Ausdehnung, nachweisbar über einen Nano-Scratchtest,
- Steigerung der Schichtdichte und Schichthärte, insbesondere bei PVD-Verfahren durch höhere Prozesstemperaturen, nachweisbar durch Ultra-Nano-Indentions-Messungen,
- Verringerung der Schichtspannungen, nachweisbar mittels der Eindringtiefe von Ultra-Nano-Indentions Messungen,
- verbesserte tribologische Eigenschaften wie Abrieb, thermochemischer Verschleiß der Oberfläche des Bauteils (nachweisbar mit Tribometer),
- verbessere Abriebfestigkeit, nachweisbar durch den Reibtest nach MIL-E-12397:

  "Radiergummi" an Mattglasscheibe aufrauen, danach reinigen mit Ethanol Hublänge einstellen: 25,4 mm (1 inch)
  Gewichte auflegen: 1020 g
  Geschwindigkeit einstellen: 15 Zyklen/Minute (V = 20,07 mm/s)
  Zyklen einstellen (10, 20 oder 40)
  Nach Prüfung reinigen mit Pinsel und mit Wattestäbchen mit Ethanol Beurteilung nach folgender Legende:

    0 = keine oder minimale Beschädigung, evtl. kleine Kratzer durch Staubkörner
    1 = einzelne Kratzer, Abriebspur erkennbar
    2 = viele feine und tiefe Kratzer
    3 = zerkratzte Oberfläche, stark beschädigte Schicht.

Insbesondere kann die Funktionsbeschichtung eine äußerste Funktionsschicht aufweisen, welche im Vergleich zum unbeschichteten Keramiksubstrat hydrophiler/lipophober, lipophiler/hydrophober ist, eine erhöhte Festigkeit aufweist und/oder Ruß abweisender ist.

Bei der äußersten Funktionsschicht kann es sich dabei um eine einzelne Schicht oder um eine Schichtkombination handeln.

Als Materialien für die äußerste Funktionsschicht kommen vor allem Fluoride, Oxide, Carbide und/oder Nitride der Erdalkalimetalle, der Übergangsmetalle, der Lanthanoiden, der Actinoiden, der Metalle der 13. Gruppe des PSE, der Metalle der 15. Gruppe des PSE, der Halbmetalle der 14. Gruppe des PSE und/oder der Halbmetallen der 15. Gruppe des PSE in Frage.

In einer bevorzugten Ausführungsform besteht die äußerste Funktionsschicht im Wesentlichen aus einem Fluorid, einem Oxid, einem Carbid oder einem Nitrid von Mg, Ca, Sc, Mo, V, Cr, Mn, Yt, Ta, W, Ni, Hf, Li, Ca, Si, Nb, Al, Ti oder Zr oder aus einer Kombinationen dieser Fluoride, Oxide, Carbide und Nitride.

In einer besonders bevorzugten Ausführungsform besteht die äußerste Funktionsschicht im Wesentlichen aus einem Fluorid, einem Oxid, einem Carbid oder einem Nitrid von Hf, Li, Ca, Mg, Si, Nb, Al, Ti oder Zr oder aus einer Kombinationen dieser Fluoride, Oxide, Carbide und Nitride.

Ganz besonders bevorzugt handelt es sich bei der äußersten Funktionsschicht um eine Schicht oder Schichtkombinationen aus Aluminiumoxid und/oder Siliziumoxid und/oder Siliziumnitrid und/oder Siliziumcarbid und/oder Zirkonikumoxid mit einer Dicke von bevorzugt höchstens 1 $\mu$m, besonders bevorzugt höchstens 650 nm und ganz besonders bevorzugt höchstens 300 nm.

Eine bevorzugte Ausführungsform der Erfindung zeichnet sich dadurch aus, dass Fingerabdrücke auf dem Werkstoffverbund wenig sichtbar sind. Dies kann beispielsweise dadurch erreicht werden, dass der Werkstoffverbund als äußerste Schicht eine Schicht mit einem Brechungsindex von 1,38 bis 1,55, bevorzugt 1,45 bis 1,50 aufweist. Der Brechungsindex der äußersten Schicht ist damit dem Brechungsindex von Lipiden bzw. von Hautfett ähnlich. Durch die Anpassung des Brechungsindex' der optischen Funktionsbeschichtung auf den Brechungsindex von Hautfett (n = 1,48) ist es gelungen, die Sichtbarkeit von Fingerabdrücke an der Oberfläche deutlich einzuschränken. Durch diese Anpassung ist es möglich, störende Effekte durch z. B. Hautkontakte zu neutralisieren. Vorzugsweise handelt es sich bei einer solchen äußersten Schicht im Wesentlichen um Siliziumdioxid.

In weiteren bevorzugten Ausführungsform besteht die äußerste Schicht der Funktionsbeschichtung im Wesentlichen aus $Al_2O_3$, $Si_3N_4$ oder $ZrO_2$ oder einer Mischung davon. Diese Materialien weisen eine sehr hohe Mohs-Härte auf und bieten deshalb einen guten Widerstand gegen ein Verkratzen der Oberfläche (Reibtest nach MIL-E-12397). Zwar ist der Brechungsindex dieser Materialien relativ hoch. Dies fällt bei der i.d.R. geringen Dicke der äußersten Schicht jedoch nicht besonders ins Gewicht.

Vorzugsweise macht die Funktionsbeschichtung das Keramiksubstrat mechanisch, thermisch und/oder chemisch widerstandsfähiger.

Vorzugsweise kann die Funktionsbeschichtung dem Belastungsfall der Hertzschen Pressung um mindestens den 2 N/m$^2$, weiter bevorzugt um mindestens 1 N/m$^2$ und besonders bevorzugt um mindestens 0,5 N/m$^2$ besser standhalten.

Wie schon weiter oben zum Stand der Technik erläutert ist ein hoher Energieeintrag zur Verbesserung der Eigenschaften der optischen Funktionsbeschichtung wünschenswert.

Polykristalline Keramiken, insbesondere Spinellkeramik (MgAl$_2$O$_4$) verändern ihre optischen Eigenschaften bis zu Temperaturen von ca. 1200 °C nicht. Dies ist insbesondere für transparente Keramiken eine wichtige Eigenschaft. Durch diese Eigenschaft sind Beschichtungsverfahren denkbar, die einen deutlich höheren Energieeintrag in den Substrat-/Schichtverbund mit sich bringen als bei der Verwendung von weniger temperaturbeständigen Substraten wie z.B. Kunststoff, aber auch Glas. Energieeinträge, die bei Gläsern und Kunststoffen zum Verzug des Bauteils führen würden, werden durch die hohe Festigkeit der polykristallinen Keramik kompensiert.

Vorzugsweise wird bei der erfindungsgemäßen Beschichtung des Keramiksubstrats mit der Funktionsbeschichtung ein thermischer Energieeintrag von mindestens 0,0158 J/g bis höchstens 159 J/g verwendet. Dies entspricht einer Beschichtungstemperatur von 40 bis 1200 °C. Dabei ist zu betonen, dass der thermische Energieeintrag höher sein kann als bei Kunststoffen und Gläsern.

So lassen sich Kunststoffe i.d.R. bis ca. 50 °C und Gläser bis ca. 500 °C beschichten, bevor es zu den weiter oben beschriebenen Nachteilen kommt. Erfindungsgemäß lässt sich mit einer in Bezug auf Kunststoffe um maximal 1150 °C und in Bezug auf Gläser um maximal 700 °C höheren Temperatur beschichten. Eine Verbesserung der Schichteigenschaften wurde dabei bereits ab einem Energieeintrag von 0,173 J/g nachgewiesen. Dies entspricht einer gegenüber Gläsern um 220 °C gesteigerten Beschichtungstemperatur.

Es wird jedoch ausdrücklich darauf hingewiesen, dass bereits mit einer geringeren Temperaturerhöhung die Schichteigenschaften verbessert werden können. Vorzugsweise wird bei der erfindungsgemäßen Beschichtung des Keramiksubstrats mit der Funktionsbeschichtung ein im Vergleich zu herkömmlichen Glassubstraten um mindestens 10 kJ/kg, weiter bevorzugt um mindestens 50 kJ/kg, besonders bevorzugt um mindestens 100 kJ/kg und ganz besonders bevorzugt um mindestens 170 kJ/kg höherer Energieeintrag verwendet.

Gegenstand der vorliegenden Erfindung ist auch ein Verfahren zur Herstellung des erfindungsgemäßen Werkstoffverbundes, welches die folgenden in einer thermochemischen Reaktionskammer an einem vorgefertigten Keramiksubstrat durchzuführende Schritte umfasst:

a) Aktivieren des Keramiksubstrats durch thermische Behandlung und/oder Plasmabehandlung und/oder Ionenbeschuss und/oder Glimmentladung,

b) Erzeugen eines Hochvakuums von 10$^{-2}$ bis 10$^{-9}$ mbar, bevorzugt von ca. 10$^{-4}$ mbar und Aufheizen der Reaktionskammer auf eine Temperatur von 40 bis 1200 °C, bevorzugt von 80 bis 400 °C und

c) Abscheiden der Funktionsbeschichtung.

Nach der Oberflächenbearbeitung (Sägen, Schleifen, Polieren, Läppen etc.) kann das zu beschichtende Keramiksubstrat noch vor der Abscheidung der Funktionsbeschichtung thermisch ausgelagert werden. Die thermische Auslagerung kann entweder in einem separaten Ofen erfolgen oder durch das Aufheizen der Reaktionskammer. Dabei wird die Oberfläche des Keramiksubstrates für die Abscheidung der Funktionsbeschichtung aktiviert.

Vermutlich wird durch diese thermische Behandlung die Oberfläche des Keramiksubstrats zusätzlich gereinigt und im Nanobereich verändert. Dabei werden für die Funktionsbeschichtung mindestens ähnlich gute Adhäsionswerte wie bei der Beschichtung mittels einer Plasmabehandlung erhalten.

Mittels zusätzlich durchgeführter Oberflächenaktivierungsverfahren wie Glimmentladung oder Ionenbeschuss oder anderen üblichen Vorbehandlungen werden dabei die Haftwerte noch weiter gesteigert. Ausdrücklich ist darauf hinzuweisen, dass die Aufzählung der Oberflächenaktivierungsverfahren nicht als abgeschlossen anzusehen ist.

Vorzugsweise erfolgt die Aktivierung in Schritt a) des genannten Herstellungsverfahrens also durch thermische Behandlung, wobei die thermische Auslagerung bei einer Temperatur von 20 bis 1400 °C, bevorzugt von 20 bis 80 °C oder von 480 bis 600 °C erfolgt.

Alternativ, vorzugsweise zusätzlich kann die Aktivierung durch Plasmabehandlung und/oder Ionenbeschuss und/oder Glimmentladung vorgenommen werden.

Die Abscheidung der Funktionsschicht in Schritt c) des obigen Herstellungsverfahrens erfolgt vorzugsweise unter Verwendung eines PVD-Verfahrens. Die Erfindung betrifft somit einen Werkstoffverbund aus vorzugsweiser transparenter, polykristalliner Keramik mit einer PVD-Funktionsbeschichtung.

Die Funktionsschicht auf dem polykristallinen, keramischen Substrat kann mittels Abscheidung aus der Dampfphase mit PVD-Verfahren sowie durch Umwandlung der abgeschiedenen Schichten z.B. mittels thermischer Oxidation erzeugt werden.

Die Abscheidung mit einem PVD-Verfahren wird dabei vorzugsweise im Temperaturbereich von 20 bis 1400 °C, weiter bevorzugt von 50 bis 1200 °C und besonders bevorzugt von 80 bis 500 °C durchgeführt.

Vorzugsweise werden in Schritt c) Fluoride, Oxide, Carbide und/oder Nitride der Erdalkalimetalle, der Übergangsmetalle, der Lanthanoide, der Actinoide, der Metalle der 13. Gruppe des PSE, der Metalle der 15. Gruppe des PSE, der Halbmetalle der 14. Gruppe des PSE und/oder der Halbmetallen der 15. Gruppe des PSE abgeschieden. Möglich ist auch die Abscheidung entsprechender Metalle und/oder Halbmetalle, bspw. von Legierungen wie TiSi oder AlSi, mit nachfolgender Oxidation.

Für die bevorzugt abgeschiedenen Verbindungen wird hier ausdrücklich auf die weiter oben ausgeführte Zusammensetzung der Funktionsschichten verwiesen.

PVD-Verfahren zur Abscheidung optischer Schichten erreichen typischerweise Temperaturen bis ca. 450 °C. Um den Energieeintrag zu steigern besteht bei diesen Verfahren die Möglichkeit während der Beschichtung mit Plasmaunterstützung und/oder Ionenbeschuss zu arbeiten. Die Plasmaunterstützung bzw. der Ionen-Beschuss führt zu einer Verdichtung der aufgebrachten Schicht.

Die beschriebenen Verfahren werden zur Zeit wegen der relativ hohen Beschichtungstemperaturen und der unzureichenden Qualität der Beschichtungen, wie z.B. der beim Arc-PVD-Verfahren auftretenden Droplets, nicht industriell eingesetzt.

Beim Arc-PVD-Verfahren wird mittels eines Lichtbogens Metall eines Targets aufgeschmolzen und so ein Metalldampf erzeugt, der auf der kälteren Bauteiloberfläche kondensiert. Beim Aufschmelzen entstehen auf dem Target punktuell kleine Schmelzbäder, auf denen sich Blasen bilden können. Platzen diese Blasen auf, bilden sich Tropfen (Droplets), die aufgrund der am Bauteil anliegenden Spannung auf das Bauteil beschleunigt werden. Diese eiförmigen Metalltropfen werden in die abgeschiedene Schicht eingebaut. Sie stellen Inhomogenitäten dar, die die Funktionalität der Beschichtung beeinträchtigen.

In Versuchen wurde eine Probe einer polykristallinen, transparenten Spinellkeramik mittels des Arc-PVD-Verfahrens mit Titan beschichtet und anschließend mittels thermischer Oxidation zu $TiO_x$ umgewandelt. Die PVD-Beschichtung wurde in 30 min. bei einer Temperatur von 500 °C, und einem Druck von $10^{-2}$ Pa durchgeführt. Die thermische Oxidation erfolgt unter einer Atmosphäre mit dem Mischungsverhältnis von 80 % Stickstoff und 20 % Sauerstoff bei Temperaturen um 1000 °C und einer Haltezeit von zwei Stunden. Im Vergleich zu der maximal möglichen Temperatur bei Glas von ca. 500 °C konnte die Temperatur auf 1000 °C verdoppelt werden. Der Energiebedarf um eine Probe der Geometrie 90 mm $\times$ 90 mm $\times$ 5 mm mit einem Probengewicht von 145 g von Raumtemperatur auf 500 °C aufzuheizen beträgt 54,9 kJ. Für eine Aufheizung auf 1000 °C wird für die gleiche Probe eine Energiemenge von 100,8 kJ benötigt. Daraus ergibt sich ein gesteigerter Energieeintrag von 59,5 kJ im Vergleich zu dem bei Glas maximal möglichen Energieeintrag. Im Vergleich zu Kunststoffsubstraten mit der maximal möglichen Beschichtungstemperatur von 80 °C konnte der Energieeintrag um 105,3 kJ gesteigert werden.

Schichtdicken sollten bei einer Beschichtung um weniger als 1 % der Schichtdicke variieren. In REM-Analysen konnte eine homogene Schichtdicke bestätigt werden. Nach der thermischen Oxidation waren keine Droplets vorhanden. Es wird angenommen, dass die Droplets durch die hohen Temperaturen bei der thermischen Oxidation aufgeschmolzen oder versintert wurden und dadurch eine Einebnung erzielt werden konnte. Durch die Oxidation der Titanschicht wurde eine amorphe Titanoxidschicht erzeugt. Die Schichtdicke der amorphen Titanoxidschicht beträgt im Mittel 0,066 $\mu$m oder 66 nm. Der Brechungsindex der amorphen Titanoxidschicht nimmt mit zunehmender Wellenlänge ab (n bei 400 nm = 3,08 und n bei 780 nm = 2,55) und beträgt im Mittel n = 2,637. Durch den im Vergleich zu Spinell (Brechungsindex n = 1,69 bis 1,72) höheren Brechungsindex von $TiO_x$ wird die Reflexion des Werkstoffverbunds aus Keramiksubstrat und Beschichtung im Vergleich zur Reflexion des Keramiksubstrats ohne Funktionsschicht erhöht.

Mit diesem Versuch wurde gezeigt, dass eine Beschichtung mit einem höheren Energieeintrag möglich ist. Im Vergleich zu dem in DE 102004027842 A1 angegebenen Stand der Technik, wies die aufgebrachte Schicht eine homogenere Schichtdicke auf, die Problematik der Droplet-Bildung bestand nicht. Eine Reflexionssteigerung des Werkstoffverbundes konnte erreicht werden.

Gegenstand der vorliegenden Erfindung ist auch die Verwendung des erfindungsgemäßen Werkstoffverbundes.

Ein erfindungsgemäß beschichtetes, insbesondere transparentes, polykristallines Keramiksubstrat, beispielsweise aus Spinell, ist durch die Eigenschaften des Substrat/Schicht-Verbundes besonders für Bauteile geeignet, die hohe Temperaturen, hohe mechanische und tribologische Belastung, hohem Druck, schlagartigen Impulsen (Beschuss, Schlag, Stoß, Sturz) oder ungerichteten Kräften und Spannungen ausgesetzt sind. Weiterhin sind Einsatzgebiete mit erhöhter Anforderung an die Sicherheit, Materialsteifigkeit sowie Leichtbau von Interesse.

Bevorzugte Verwendungen eines erfindungsgemäßen Werkstoffverbundes sind:

- Uhrengläser,
- Scannerabdeckungen für Kassenanlagen,
- Schutzscheiben für Ofenanlagen, Vakuumanlagen, Strahlkabinen, zerspanende Maschinen und Anlagen,
- Objektivschutzscheiben, z.B. Foto-Kamera/Mikroskopie,
- Schaugläser für z.B. Rasterelektronenmikroskopie,
- Instrumentenscheiben für hohe Druckbereiche, z.B. Manometer,
- Displayscheiben, z.B. für Smartphone, Laptop, Bedienelemente,
- architektonische Elemente wie z.B. Bodenfliesen, Bodenscheiben,
- überfahrbare Scheinwerferscheiben für Start- und Landebahnen,
- Scheiben für Unterwasserscheinwerfer (hoher Druck),
- Panzerglas/Schutzverglasung,
- Optische Hochleistungsspiegel, z.B. in Teleskopen, Laseranlagen, Satelliten,
- Prismen für Messgeräte (keine Einfärbung des Lichts, da das Substrat rein weiß ist)
- Schiffsbau (militärisch und zivil), Über- und Unterwasser (z.B. Forschungs-U-Boote), Natur-/Unterwasserbeobachtungsschiffe.
- Scheiben in Luft- und Raumfahrt.

Einige der aufgeführten Verwendungen, die derzeit von Glas-, Glaskeramik- oder Kunststoffsubstraten mittels Sonderlösungen oder konstruktiven Kompromissen abgedeckt werden, können durch die Neuentwicklung einer polykristallinen, transparenten, transluzenten oder opaken, beschichteten Keramik, besser abgedeckt werden.

Besonders bevorzugt werden die erfindungsgemäßen Werkstoffverbunde für die Herstellung von Uhrengläsern, Abdecklinsen, Displays von Smartphones und Tablett-PCs, Bildschirmen von Laptops, Scannerabdeckungen von Kassenanlagen und Objektivschutzscheiben von Fotokameras, Objektiven, Schutzscheiben für Ofenanlagen, Vakuumanlagen, Strahlkabinen, zerspanende Maschinen und Anlagen, Schaugläsern für Vakuumbereiche oder chemische Stoffe oder im Landwirtschaftlichen Bereich, Instrumentenscheiben für hohe Druckbereiche, Bedienelementen wie Tasten und Hebeln, architektonischen Elementen wie Bodenfliesen, Bodenscheiben, überfahrbare Scheinwerferscheiben, Scheiben für Unterwasserscheinwerfer, Panzerglas/Schutzverglasung, optischen Hochleistungsspiegeln, Prismen für Messgeräte, sowie im Schiffsbau (militärisch und zivil), im Über- und Unterwasserbereich (z.B. Forschungs-U-Boote), bei Natur/Unterwasserbeobachtungsschiffen, in Luft- und Raumfahrt verwendet.

Die Erfindung wird nachfolgend anhand von Beispielen näher erläutert, ohne sie dadurch aber einzuschränken.

Beispiel 1: Erhöhte Transmission im visuellen Bereich

Auf ein transparentes Substrat aus $MgAl_2O_4$ wird eine Antireflexschicht aufgebracht. Dazu werden die Substrate optimal vorgereinigt. Das kann manuell oder durch einen automatisierten Reinigungsprozess erfolgen. Nach dem Platzieren in der Anlage werden die Teile einer Vorbehandlung unterzogen, die eine Plasmabehandlung oder ein Ionen-Beschuss sein kann, beispielsweise einer Plasma-Glimmentladung (3 bis 10 min). Anschließend wird ein Hochvakuum von ca. $1*10^{-4}$ mbar erzeugt und die Beschichtungskammer auf einen Temperaturbereich von 80 bis 400 °C aufgeheizt. Im Folgenden, eigentlichen Beschichtungsprozess wird eine erste höher brechende Schicht aus $HfO_2$ aufgebacht. Auf diese Schicht wird eine weitere niedriger brechende Schicht aus $SiO_2$ aufgetragen. Diese beiden Schichtwerkstoffe, werden abwechselnd (alternierend) abgeschieden und mit einer kratzfesten $SiO_2$-Deckschicht abgeschlossen. Die Schichten werden z.B. mittels des ESV-PVD-Verfahrens (Elektronenstrahlverdampfen) abgeschieden. Die Abscheidetemperatur liegt im Bereich von ca. 80 °C.

Schichten Vorderseite

Zentralwellenlänge : 532 nm

Tabelle 1: Schichtaufbau einer transparenten Anti-Reflex-Beschichtung

| 1 : Mat. 4 | , d=26.17 nm | 2 : Mat. 3 | , d=30.3 nm |
|---|---|---|---|
| 3 : Mat. 4 | , d=38.57 nm | 4 : Mat. 3 | , d=42.24 nm |
| 5 : Mat. 4 | , d=37.19 nm | 6 : Mat. 3 | , d=28.46 nm |

(fortgesetzt)

| 7 : Mat. 4 | , d=146.01 nm | 8 : Mat. 3 | , d=84.48 nm |
|---|---|---|---|

Phys. Dicke = 433.41 nm
Mat. 3 : SiO2-heiss-V1600
Mat. 4 : HfO2-heiss-V1600

Auf diese Weise wird die Transmission des Werkstoffverbundes im UV-nahen-Bereich (350 bis 450 nm) verbessert, und dadurch die Transmission des Werkstoffverbundes im visuellen Bereich (380-780 nm) homogener gestaltet.

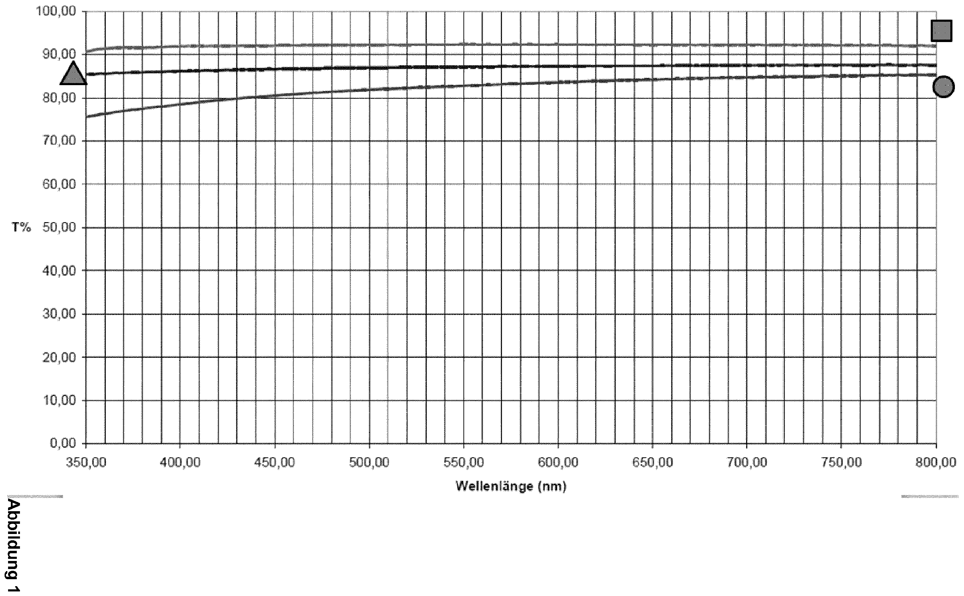

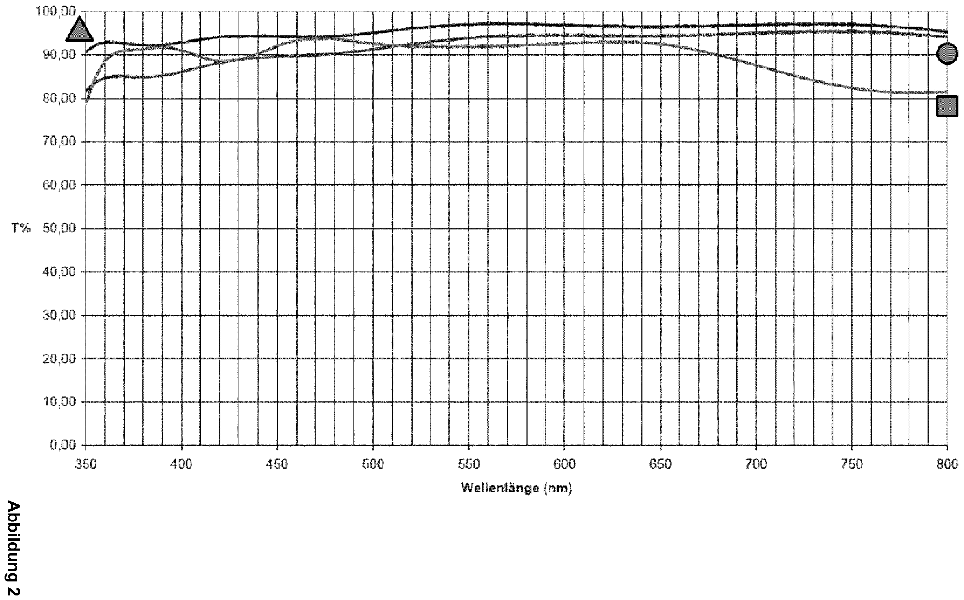

Dies wird in den Abbildungen 1 und 2 gezeigt. Abbildung 1 gibt die wellenlängenabhängige Transmission (T% = prozentuale Transmission) für ein 0,7 mm (Dreieck) und ein 4,0 mm (Kreis) dickes Keramiksubstrat sowie zum Vergleich die Kurve eines Glassubstrats (Quadrat) wieder. Abbildung 2 ist hingegen die entsprechende Transmissionskurve für die beidseitig mit einer optischen Funktionsbeschichtung versehenen Substrate zu entnehmen.

Das so beschichtete Substrat ist insbesondere zur Verwendung als Abdecklinse für Kameralinsen oder für Displays in einem Smartphone geeignet.

Beispiel 2: Erhöhte Transmission im IR-Bereich (nicht erfindungsgemäß)

Auf ein transparentes Keramiksubstrat aus $MgAl_2O_4$ wird eine IR-reflektierende Schicht aufgebracht. Dazu werden die Substrate optimal vorgereinigt. Das kann manuell, oder durch einen automatisierten Reinigungsprozess erfolgen. Nach dem Platzieren in der Anlage werden die Teile einer Vorbehandlung unterzogen, die eine Plasmabehandlung oder ein Ionen-Beschuss sein kann, beispielsweise einer Plasma-Glimmentladung (3 bis 10 min). Anschließend wird ein Hochvakuum von ca. $1*10^{-4}$ mbar erzeugt und die Beschichtungskammer auf einen Temperaturbereich von 100 bis 700 °C aufgeheizt.

Im Folgenden, eigentlichen Beschichtungs-Prozess wird eine erste hoch brechende Schicht aus z.B. Silizium mit einem Aluminium Anteil kleiner 15 Gew.-% aufgebacht. Der Brechungsindex liegt bei ca. 4,7. Auf diese Schicht wird eine dielektrische weitere hoch brechende Schicht z.B. $TiO_2$ aufgetragen. Zwischen der dielektrischen Grundschicht und der IR- Reflexionsschicht liegt eine haftvermittelnde Zwischenschicht. Die IR-Reflexionsschicht kann aus Silber (Ag) bestehen oder eines der bekannten alternativen IR-Reflexionsmaterialien sein. Über der IR-Reflexionsschicht wird eine Blockerschicht aufgebracht. Diese Blockerschicht kann aus Nickelchromoxid bestehen. Die Deckschicht kann aus Siliziumnitrid bestehen.

Die Schichten werden z.B. mittels des ESV-PVD-Verfahrens (Elektronenstrahlverdampfen) oder eines Sputter-Verfahrens abgeschieden. Die Abscheidetemperatur liegt im Bereich von 110 bis 500 °C.

Dadurch kann die Reflexion von elektromagnetischen Wellen (Licht) im IR- Bereich (780 nm bis 40.000 nm) gesteigert werden.

**Patentansprüche**

1. Werkstoffverbund aus einem Keramiksubstrat aus einer polykristallinen Keramik mit einer Funktionsbeschichtung, wobei die Funktionsbeschichtung mindestens zwei Doppelschichten bestehend aus einer ersten Funktionsschicht im Wesentlichen bestehend aus Titan(IV)oxid, Hafnium(IV)oxid und/oder Niob(V)oxid und einer zweiten Funktionsschicht im Wesentlichen bestehend aus Siliziumdioxid umfasst und der Brechungsindex der Funktionsbeschichtung mit dem Brechungsindex des Keramiksubstrats in einem Verhältnis von 1,5:1 bis 1:1,5 im Bereich von 380 - 780 nm steht, **dadurch gekennzeichnet, dass** das Keramiksubstrat aus einem Oxid, Nitrid oder Carbid von Mg, Al, Zr, Si oder Y oder Kombinationen dieser Oxide, Nitride und Carbide besteht, und jede Funktionsschicht im Wesentlichen aus Titan(IV)oxid, Zirkonium(IV)oxid, Hafnium(IV)oxid, Niob(V)oxid und/oder Aluminiumoxid oder Magnesiumfluorid und/oder Siliziumdioxid besteht.

2. Werkstoffverbund nach Anspruch 1, **dadurch gekennzeichnet, dass** das Keramiksubstrat aus $MgAl_2O_4$ besteht.

3. Werkstoffverbund nach einem der vorhergehenden Ansprüche, **dadurch gekennzeichnet, dass** die Funktionsbeschichtung mindestens 3 und bevorzugt mindestens 4 dieser Doppelschichten umfasst.

4. Werkstoffverbund nach einem der vorhergehenden Ansprüche, **dadurch gekennzeichnet, dass** die ersten Funktionsschicht vom Substrat aus betrachtet die weiter innen und die zweite Funktionsschicht die weiter außen liegende Schicht innerhalb einer Doppelschicht ist.

**5.** Werkstoffverbund nach einem der vorhergehenden Ansprüche, **dadurch gekennzeichnet, dass** die Funktionsbeschichtung eine Gesamtschichtdicke von höchstens 2 $\mu$m aufweist.

**6.** Werkstoffverbund nach einem der vorhergehenden Ansprüche, **dadurch gekennzeichnet, dass** die Gesamtschichtdicke der Funktionsbeschichtung zur Dicke des Keramiksubstrats in einem Verhältnis von $0,1 \times 10^{-3} : 1$ bis $40 \times 10^{-3} : 1$ stehen.

**7.** Verfahren zur Herstellung eines Werkstoffverbundes nach einem der Ansprüche 1 bis 6, **dadurch gekennzeichnet, dass** es folgende, in einer thermochemischen Reaktionskammer an einem vorgefertigten Keramiksubstrat durchzuführende Schritte umfasst:

a) Aktivieren des Keramiksubstrats durch thermische Behandlung und/oder Plasmabehandlung und/oder Ionenbeschuss und/oder Glimmentladung,
b) Erzeugen eines Hochvakuums von $10^{-2}$ bis $10^{-9}$ mbar und Aufheizen der Reaktionskammer auf eine Temperatur von 40 bis 1200 °C.
c) Abscheiden der Funktionsbeschichtung.

**8.** Verfahren nach Anspruch 7, **dadurch gekennzeichnet, dass** die Aktivierung in Schritt a) durch thermische Behandlung erfolgt, wobei die thermische Auslagerung bei einer Temperatur von 480 bis 600 °C erfolgt und/oder dass Schritt c) bei einer Temperatur von 20 bis 1400 °C durchgeführt wird.

**9.** Verfahren nach Anspruch 7 , **dadurch gekennzeichnet, dass** die Aktivierung in Schritt a) durch Plasmabehandlung oder durch Ionenbeschuss erfolgt.

**10.** Verwendung eines Werkstoffverbundes nach einem der Ansprüche 1 bis 6 für die Herstellung von Uhrengläsern, Scannerabdeckungen von Kassenanlagen oder Objektivschutzscheiben von Fotokameras.

**Claims**

**1.** Composite of a ceramic substrate composed of a polycrystalline ceramic with a functional coating, the functional coating comprising at least two double layers consisting of a first functional layer substantially consisting of titanium(IV) oxide, hafnium(IV) oxide and/or niobium(V) oxide and a second functional layer substantially consisting of silicon dioxide, and the ratio of the refractive index of the functional coating to the refractive index of the ceramic substrate being from 1.5:1 to 1:1.5 in the range of 380 - 780 nm, **characterized in that** the ceramic substrate consists of an oxide, nitride or carbide of Mg, Al, Zr, Si or Y or combinations of these oxides, nitrides and carbides, and each functional layer consists substantially of titanium(IV) oxide, zirconium(IV) oxide, hafnium(IV) oxide, niobium(V) oxide and/or aluminium oxide or magnesium fluoride and/or silicon dioxide.

**2.** Composite according to Claim 1, **characterized in that** the ceramic substrate consists of $MgAl_2O_4$.

**3.** Composite according to any of the preceding claims, **characterized in that** the functional coating comprises at least 3 and preferably at least 4 of these double layers.

**4.** Composite according to any of the preceding claims, **characterized in that** the first functional layer, as viewed starting from the substrate, is the more inward layer and the second functional layer is the more outward layer within a double layer.

**5.** Composite according to any of the preceding claims, **characterized in that** the functional coating has a total layer thickness of at most 2 $\mu$m.

**6.** Composite according to any of the preceding claims, **characterized in that** the ratio of the total layer thickness of the functional coating to the thickness of the ceramic substrate is from $0.1 \times 10^{-3}:1$ to $40 \times 10^{-3}:1$.

**7.** Process for producing a composite according to any of Claims 1 to 6, **characterized in that** it comprises steps as follows, to be carried out on a prefabricated ceramic substrate in a thermochemical reaction chamber:

a) activating the ceramic substrate by thermal treatment and/or plasma treatment and/or ion bombardment and/or glow discharge,

b) generating a high vacuum of $10^{-2}$ to $10^{-9}$ mbar and heating the reaction chamber to a temperature of 40 to 1200°C,

c) depositing the functional coating.

8. Process according to Claim 7, **characterized in that** the activating in step a) takes place by thermal treatment, the thermal ageing taking place at a temperature of 480 to 600°C, and/or **in that** step c) is carried out at a temperature of 20 to 1400°C.

9. Process according to Claim 7, **characterized in that** the activating in step a) takes place by plasma treatment or by ion bombardment.

10. Use of a composite according to any of Claims 1 to 6 for producing watch glasses, scanner covers of till units or protective lens plates of photographic cameras.

**Revendications**

1. Matériau composite constitué d'un substrat céramique en une céramique polycristalline ayant un revêtement fonctionnel, le revêtement fonctionnel comprenant au moins deux bicouches constituées d'une première couche fonctionnelle constituée pour l'essentiel d'oxyde de titane(IV), d'oxyde de hafnium(IV) et/ou d'oxyde de niobium(V) et d'une deuxième couche fonctionnelle constituée pour l'essentiel de dioxyde de silicium, et l'indice de réfraction du revêtement fonctionnel fait avec l'indice de réfraction du substrat céramique un rapport de 1,5:1 à 1:1,5 dans la plage de 380 à 780 nm, **caractérisé en ce que** le substrat céramique est constitué d'un oxyde, d'un nitrure ou d'un carbure de Mg, Al, Zr, Si ou Y ou de combinaisons de ces oxydes, nitrures et carbures, et **en ce que** chaque groupe fonctionnel est pour l'essentiel constitué d'oxyde de titane(IV), d'oxyde de zirconium(IV), d'oxyde de hafnium(IV), d'oxyde de niobium(V) et/ou d'oxyde d'aluminium ou de fluorure de magnésium et/ou de dioxyde de silicium.

2. Matériau composite selon la revendication 1, **caractérisé en ce que** le substrat céramique est constitué de $MgAl_2O_4$.

3. Matériau composite selon l'une des revendications précédentes, **caractérisé en ce que** le revêtement fonctionnel comprend au moins 3 et de préférence au moins 4 bicouches.

4. Matériau composite selon l'une des revendications précédentes, **caractérisé en ce que** la première couche fonctionnelle est, dans une double couche, celle qui est située le plus à l'intérieur, et la deuxième couche fonctionnelle est celle qui est située le plus à l'extérieur, quand ou regarde à partir du substrat.

5. Matériau composite selon l'une des revendications précédentes, **caractérisé en ce que** le revêtement fonctionnel présente une épaisseur totale de couche d'au plus 2 µm.

6. Matériau composite selon l'une des revendications précédentes, **caractérisé en ce que** l'épaisseur totale de couche du revêtement fonctionnel fait avec l'épaisseur du substrat céramique un rapport de $0,1 \times 10^{-3}$:1 à $40 \times 10^{-3}$:1.

7. Procédé de fabrication d'un matériau composite selon l'une des revendications 1 à 6, **caractérisé en ce qu'**il comprend les étapes suivantes, devant être mises en oeuvre dans une chambre de réaction thermochimique sur un substrat céramique préfabriqué :

a) activation du substrat céramique par traitement thermique et/ou traitement plasma et/ou bombardement d'ions et/ou décharge luminescente,

b) production d'un vide poussé de $10^{-2}$ à $10^{-9}$ mbar et chauffage de la chambre de réaction à une température de 40 à 1 200 °C,

c) dépôt du revêtement fonctionnel.

8. Procédé selon la revendication 7, **caractérisé en ce que** l'activation de l'étape a) a lieu par traitement thermique, le vieillissement thermique ayant lieu à une température de 480 à 600 °C, et/ou **en ce que** l'étape c) est mise en oeuvre à une température de 20 à 1 400 °C.

9. Procédé selon la revendication 7, **caractérisé en ce que** l'activation de l'étape a) a lieu par traitement plasma ou par bombardement d'ions.

10. Utilisation du matériau composite selon l'une des revendications 1 à 6 pour la fabrication de verres de montre, couvercles de scanner pour installations de caisse ou capuchons de protection d'objectifs d'appareils photo.

Abbildung 1

Abbildung 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004027842 A1

- EP 1962260 A